# EUROPÄISCHE PATENTANMELDUNG

(11) **EP 0 955 219 A2**
(43) Veröffentlichungstag der Anmeldung: **10.11.1999**
(21) Anmeldenummer: 99108952.5
(22) Anmeldetag: 06.05.1999
(51) Int. Cl.: B60R 25/10, G08B 25/08

(54) **Einrichtung zum Fernübertragen von Zustandsdaten eines Objektes**

(30) Priorität: 08.05.1998 AT 78098
(71) Anmelder: E-Tronic-Handelsges.m.b.H., 6020 Innsbruck (AT)
(72) Erfinder: Mondl-Greissinger, Georg, 6142 Mieders Nr. 67 (AT)
(74) Vertreter: Torggler, Paul Norbert

(57) **Zusammenfassung**

Einrichtung zum Fernübertragen von Zustandsdaten eines Objektes, mit einem oder mehreren Sensoren zum Erfassen mindestens eines Zustandes des Objektes in Form von elektrischen Zustandssignalen und einer Sendeeinheit zum drahtlosen Senden von Zustandsdaten in Abhängigkeit von den erfaßten Zustandssignalen, wobei dem Objekt zum Übertragen der Zustandsdaten an ein einem Benutzer zugeordnetes Mobiltelefon eine Einrichtung zur Teilnahme an einem Mobiltelefonnetz als Sendeeinheit zugeordnet ist.

## Beschreibung

Die Erfindung betrifft eine Einrichtung zum Fernübertragen von Zustandsdaten eines Objektes, mit einem oder mehreren Sensoren zum Erfassen mindestens eines Zustandes des Objektes in Form von elektrischen Zustandssignalen und einer Sendeeinheit zum drahtlosen Senden von Zustandsdaten in Abhängigkeit von den erfaßten Zustandssignalen.

Eine solche Einrichtung kann insbesondere als Alarmanlage für mobile Objekte, vorzugsweise Kraftfahrzeuge, eingesetzt werden, wobei die Sensoren beispielsweise das Öffnen einer Türe oder das Starten des Motors erfassen. Bei den meisten Alarmanlagen löst ein Ansprechen eines solchen Sensors eine direkte Reaktion am Fahrzeug aus, beispielsweise ein Hupen oder Blinken. Es ist aber auch bekannt, die beim Ansprechen eines Sensors entstehenden elektrischen Zustandssignale mittels einer Sendeeinheit an eine Alarmzentrale zu senden, wo eine Person dann weitere Schritte einleiten kann.

Aufgabe der Erfindung ist es, eine verbesserte Einrichtung zum Fernübertragen von Zustandsdaten eines Objektes, insbesondere eine Alarmanlage für Fahrzeuge, zu schaffen, die bei verhältnismäßig geringem Aufwand eine gute und rasche Überwachung des Zustandes des Objektes erlaubt.

Erfindungsgemäß wird dies dadurch erreicht, daß dem Objekt zum Übertragen der Zustandsdaten an ein einem Benutzer zugeordnetes Mobiltelefon eine Einrichtung zur Teilnahme an einem Mobiltelefonnetz als Sendeeinheit zugeordnet ist, und daß dem Objekt weiters eine Sprachsignaleinrichtung zugeordnet ist, die in Abhängigkeit von dem erfaßten Zustandssignalen Sprachsignale an die Einrichtung zur Teilnahme an einem Mobiltelefonnetz abgibt, um die Zustandsdaten in Form von Sprachsignalen an das Mobiltelefon des Benutzers zu übertragen.

Mit der erfindungsgemäßen Einrichtung kann das bereits weitverbreitete Mobiltelefonnetz zur Datenübertragung ausgenutzt werden, um ein Objekt, insbesondere ein mobiles Objekt wie ein Fahrzeug, auf seinen Zustand zu überwachen. Gedacht ist dabei vor allem an die Funktion einer Alarmanlage, es ist aber auch möglich andere Zustandsdaten des Fahrzeuges, wie beispielsweise den Kühlwasserstand oder den Tankinhalt, zu übertragen.

Die Erfindung besteht jedoch nicht nur in der Idee, ein Mobiltelefonnetz zur Datenübertragung zu verwenden, sondern insbesondere auch darin, die Datenübertragung zu einem Mobiltelefon, das dem Benutzer zugeordnet ist (daß er also immer mit sich führen kann) zu übertragen. Es erfolgt also keine Datenübertragung zu einer Alarmzentrale, die von einer oder mehreren Bedienungspersonen besetzt sein muß, sondern direkt eine rasche Übertragung in Echtzeit an den Benutzer, beispielsweise den rechtmäßigen Besitzer eines Fahrzeuges. Derartige Mobiltelefone (Handys) sind heute bereits sehr kostengünstig erhältlich und werden in der Zukunft noch vermehrt Einzug halten.

Die Übertragung der Zustandsdaten direkt an das Handy des Benutzers ermöglicht diesem ein rasches Einschreiten, was vor allem bei der Funktion einer Alarmanlage eines mobilen Fahrzeuges von großer Bedeutung ist, da die Fahrzeuge sehr häufig nicht weit vom Benutzer stehen und daher bei einem raschen Einschreiten ein Diebstahl verhindert werden kann. Bei der erfindungsgemäßen Einrichtung kann also nicht nur das überwachte Objekt mobil sein, es braucht sich auch der Benutzer, der das Objekt überwachen will, nicht an einem bestimmten Ort befinden (so lange er sich im Bereich eines (öffentlichen) Mobiltelefonnetzes befindet, welches aber bereits ziemlich flächendeckend existiert).

Natürlich kann die erfindungsgemäße Einrichtung aber auch zum Überwachen stehender Objekte, beispielsweise von Gebäuden herangezogen werden.

Um dem Benutzer den Zustand des Objektes über sein Handy mitteilen zu können, ist vorzugsweise vorgesehen, daß dem Objekt weiters eine Sprachsignaleinrichtung zugeordnet ist, die in Abhängigkeit von dem erfaßten Zustandssignalen Sprachsignale an die Einrichtung zur Teilnahme an einem Mobiltelefonnetz abgibt, um die Zustandsdaten in Form von Sprachsignalen an das Mobiltelefon des Benutzers zu übertragen. Auf diese Weise ist es dem Benutzer möglich, den Zustand des Objektes im Klartext an seinem Handy zu hören, beispielsweise kann ihm bei der Funktion einer Alarmanlage eines Kraftfahrzeuges mitgeteilt werden, ob die Türe des Fahrzeugs geöffnet, der Motor gestartet oder das Kraftfahrzeug abgeschleppt wird. Er wird also von seinem Auto angerufen und kann im Klartext hören, was mit seinem Auto geschieht.

Die Sprachsignaleinrichtung kann einen vorzugsweise elektronischen Sprachspeicher aufweisen, in dem vorbestimmte Texte abgespeichert sind, die dem Ansprechen eines oder mehrerer Sensoren in einer vorbestimmten Weise zugeordnet sind. Wenn beispielsweise ein Türkontakt als Sensor anspricht, kann der vorgespeicherte Text 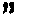 Die Türe wurde geöffnet" aus dem Sprachspeicher der Sprachsignaleinrichtung an die Einrichtung zur Teilnahme an einem Mobiltelefonnetz abgegeben und über dieses Mobiltelefonnetz dem Handy des Benutzers übertragen werden.

Selbstverständlich ist es auch möglich, die Sprache auf andere Weise zu erzeugen, beispielsweise durch Aufzeichnung von Mitteilungen auf einem Magnetband oder durch Verwendung eines Sprachsynthesizers. Wesentlich ist, daß die von den Sensoren erzeugten elektrischen Zustandssignale in verständliche und über das Mobiltelefonnetz übertragbare Sprachsignale übersetzt werden.

Neben dieser bevorzugten Ausführungsversion der Übertragung der Zustandsdaten in Form von Sprachsignalen bestehen grundsätzlich auch noch andere Möglichkeiten Daten an das Mobiltelefon bzw. Handy des Benutzers zu übertragen, beispielsweise die sogenannte SMS-Funktion, bei der Nachrichten auf das Display des Mobiltelefones übersendbar sind. Auch wäre es möglich, bestimmte nichtsprachliche Tonfolgen zu übertragen. Diese haben jedoch den Nachteil, daß sie schwerer verständlich sind. Die genannten SMS-Nachrichten werden derzeit noch ziemlich zeitverzögert gesendet. In Zukunft kann diese Möglichkeit jedoch an Bedeutung gewinnen, wenn die Übertragung von SMS-Nachrichten auch praktisch in Echtzeit möglich ist.

Für den Start der Übertragung der Zustandsdaten des Objektes an den Benutzer bestehen vor allem zwei Möglichkeiten, die natürlich auch miteinander kombiniert werden können. Einmal ist es möglich, daß beim Ansprechen mindestens eines vorbestimmten Sensors in einer vorgegebenen Weise die dem Objekt zugeordnete Einrichtung zur Teilnahme an einem Mobiltelefon automatisch das Mobiltelefon des Benutzers aufgrund einer gespeicherten Nummer anwählt und dann die Zustandsdaten, vorzugsweise in Form von Sprachsignalen, überträgt. Dies ist vor allem bei der Funkton einer Alarmanlage bevorzugt. Es ist aber auch möglich, daß der Benutzer die Zustandsdaten abfrägt, indem er über die Einrichtung zur Teilnahme an einem Mobiltelefonnetz beim Objekt anruft. Das Mobiltelefonnetz erlaubt ja eine Kommunikation in beiden Richtungen, was hier ausgenutzt werden kann. Dabei kann der Benutzer, beispielsweise Steuerdaten durch Tastendrucke am Mobiltelefonnetz in Form von analogen Tonsignalen an die dem Objekt zugeordnete Einrichtung übermitteln. Ein Dekoder kann diese analogen Tonsignale dann digitale Steuersignale umwandeln, welche beispielsweise die Übertragung des momentanen Status des Objektes bzw. der Sensoren an das Mobiltelefon veranlassen. Die Steuerdaten können jedoch nicht nur zum Initialisieren einer Abfrage herangezogen werden, beispielsweise ist es auch möglich mittels solcher Steuerdaten das Aktivieren oder Deaktivieren der gesamten Einrichtung zu veranlassen oder bestimmte Schaltfunktionen von dem Objekt zugeordneten Zusatzeinrichtungen veranlassen. Bei einer Alarmanlage ist es beispielsweise möglich, vom Mobiltelefon des Benutzers aus ein Hupen auszulösen oder das Fahrzeug stillzulegen, indem beispielsweise die Kraftstoffzufuhr unterbrochen wird. Der Begriff des Sensors in der vorliegenden Anmeldung ist grundsätzlich sehr weit zu sehen, bevorzugt sind jedoch Sensoren zum Erfassen technisch-physikalischer Zustände des Objektes, beispielsweise Schaltkontakte, Füllstandsmesser etc. Unter einem Sensor wird jedoch nicht nur ein einzelner Bauteil verstanden, sondern auch eine gesamte Einrichtung, die in der Lage ist in Abhängigkeit vom Zustand des Objektes elektrische Signale abzugeben. Beispielsweise kann ein solcher Sensor ein GPS-Empfänger sein, der es erlaubt den Ort des Objektes, beispielsweise eines Fahrzeuges als dessen Zustand zu erfassen. Die Koordinaten können dann automatisch oder auf Abfrage durch den Benutzer, vorzugsweise in Form von Sprachsignalen an das Mobiltelefon des Benutzers jederzeit übertragen werden. Damit nicht jeder beliebige den Standort des Fahrzeugs über ein Telefon abfragen kann, können Sicherheitsmaßnahmen eingebaut sein, beispielsweise das Überprüfen eines Pin-Codes, den der Benutzer eingeben muß, um mit seinem Objekt kommunizieren zu können. Eine erhöhte Sicherheitsstufe ist durch den Einbau einer Rufnummernerkennungseinheit, in der dem Objekt zugeordneten Einrichtung zur Teilnahme an einem Mobiltelefonnetz möglich. Damit ist es nur von einem bestimmten Mobiltelefon aus, das dem Benutzer gehört und das den Benutzer anhand seiner Rufnummer erkennt, möglich zu kommunizieren.

Dem genannten GPS-Empfänger kann auch ein autonomes Navigationssystem nachgeschaltet sein, das ohne Satellitenkontakt die Fahrtroute eines Fahrzeugs durch Messung Beschleunigungen und Drehrichtungsänderungen erfassen bzw. aufzeichnen kann.

Weitere Vorteile und Einzelheiten der Erfindung werden anhand der nachfolgenden Figurenbeschreibung näher erläutert.

Die Fig. zeigt schematisch ein Blockschaltbild einer erfindungsgemäßen Einrichtung in Form einer Alarmanlage für ein Fahrzeug.

Die in der Fig. dargestellte Einrichtung dient zum Fernübertragung von Zustandsdaten eines Objektes, im vorliegenden Fall eines Autos, an den Benutzer bzw. Besitzer des Autos. Diese Einrichtung kann insbesondere als Alarmanlage eingesetzt werden. Zum Erfassen des technisch-physikalischen Zustandes des Autos, beispielsweise der Öffnung einer Tür, des Startens des Motors, sind Sensoren A, B, C, D vorgesehen, die in Abhängigkeit vom Zustand elektrische Zustandssignale über die Leitungen 1 an eine Sensor-Schaltzentrale abgeben. Von dort können die elektrischen Zustandsdaten, vorzugsweise nach Digitalisierung, einem Mikroprozessor 3 über eine Leitung 4 zugeführt werden. Dieser Mikroprozessor steht mit der Einrichtung 5 (GSM-Modul) zur Teilnahme an einem Mobiltelefonnetz in Verbindung. Der GSM-Modul 5 kann über eine Antenne 6 mit den stark schematisiert dargestellten Mobiltelefonnetz 7, welches in Wirklichkeit in an sich bekannter Weise aus einer Vielzahl von flächendeckend verteilten Sende- und Empfangseinheiten besteht, Verbindung aufnehmen und somit mit dem Mobiltelefon (Handy) 8, welches der Benutzer mitführt, kommunizieren. Dabei ist sowohl der Aufenthaltsort des Fahrzeuges als auch des Benutzers frei, solange sich beide im Empfangsbereich des Mobiltelefonnetzes befinden. Um die Funkton auch bei kurzzeitiger Unterbrechung des Kontaktes mit dem Mobiltelefonnetz aufrecht zu erhalten, kann vorgesehen sein, daß die Zustandsdaten zeitversetzt später übertragen werden, sobald der Kontakt mit einem Mobiltelefonnetz wieder hergestellt ist. Im allgemeinen ist aber eine Übertragung der Zustandsdaten praktisch in Echtzeit direkt an den Benutzer bzw. sein Handy 8 möglich. Er braucht nichts mitzuführen als sein Handy, was heutzutage ohnehin meist der Fall ist.

Um die Datenübertragung zu erleichtern, ist bevorzugt vorgesehen diese Daten in Form von Sprachsignalen an das Mobiltelefonnetz des Benutzers zu übertragen. Dazu ist ein Sprachspeicher 9, vorzugsweise ein EEPROM, vorgesehen, in dem vorbestimmte Texte abgespeichert sind, die beim Ansprechen eines oder mehrerer Sensoren A, B, C und/ oder D - vom Mikroprozessor 3 gesteuert - über die Leitung 10 dem GSM-Modul zugeführt werden. Von dort werden diese Sprachsignale dann als Klartext über das Mobiltelefonnetz 7 dem Handy 8 des Benutzers zugeführt. Er hört also nach einem Anruf in Klartext Informationen über den Zustand seines Fahrzeugs.

Die Einrichtung kann dabei so aufgebaut sein, daß bei jeder Zustandsänderung automatisch ein Anwählen des Handys des Benutzers erfolgt und jedesmal der aktuelle Zustand, vorzugsweise in Form von Sprachsignalen übertragen wird.

Zusätzlich oder alternativ ist es auch möglich sogenannte SMS-Nachrichten zu versenden, die der Benutzer dann am Display 11 seines Mobiltelefons 8 sehen kann.

Darüberhinaus ist es bei der gezeigten bevorzugten Ausführungsform dem Benutzer möglich, über sein Handy 8 Steuerdaten an die dem Objekt zugeordnete, beispielsweise also im Auto, eingebaute Einrichtung zu senden. Dazu kann er die Tastatur 12 benutzen, die analoge Tonfolgesignale erzeugt. Der GSM-Modul 5 ist in an sich bekannter Weise nicht nur zum Senden von Daten, sondern auch zum Empfang von solchen Steuerdaten aus dem Mobiltelefon des Benutzers ausgebildet. Ein Dekoder 13 kann diese Tonsignale dann in digitale, vorzugsweise binäre Steuersignale umwandeln, welche über die Leitung 14 dem Mikroprozessor 3 zuführbar sind. Mittels solcher Steuerdaten können verschiedenste Funktionen realisiert werden, beispielsweise das Aktivieren und Deaktivieren der gesamten Einrichtung (scharf machen bzw. entschärfen der Alarmanlage, Abfragen des Status zumindest eines Sensors oder das An- und Abschalten von dem Objekt zugeordneten Zusatzeinrichtungen 15). Eine solche Zusatzeinrichtung kann beispielsweise eine Hupe oder eine Einrichtung zur Unterbrechung der Kraftstoffzufuhr sein. Der Benutzer kann also über die Tastatur 12 seines Mobiltelefons 8, vorzugsweise nach Identifizierung über einen Pin-Code und eine Rufnummernerkennung Befehle an seinem Fahrzeug ausführen, beispielsweise das Stoppen des Fahrzeugs nach einem Diebstahl oder das Auslösen eines Hupsignals zum Wiederauffinden eines gestohlenen Fahrzeuges.

Die Einrichtung ist auch in der Lage, die vom Handy aus übertragenen Befehle durch Sprachsignale zu bestätigen und/oder durchgeführte Schaltvorgänge od. dgl. zu quittieren.

Als zusätzliche Sicherheitsmaßnahme kann die in der Fig. gezeigte Alarmanlage weiters einen GPS-Empfänger 16 aufweisen, der an eine GPS-Antenne 17 angeschlossen ist. Der GPS-Empfänger erlaubt es aufgrund der Auswertung von Satellitensignalen die Position des Fahrzeuges genau zu erfassen. Um auch bei einem - zeitweisen - Ausfall des GPS-Empfängers (beispielsweise in Tunneln oder Tiefgaragen) eine Verfolgung des Fahrweges des gestohlenen Fahrzeugs zu ermöglichen, kann dem GPS-Empfänger ein autonomes Navigationssystem 18 nachgeschaltet sein, das aufgrund von Beschleunigungsmessungen und Winkeländerungsmessungen ohne Kontakt zu einem Satelliten erlaubt, die Fahrtroute des Fahrzeuges zu bestimmen. Die oben beschriebenen Komponenten sind an sich bekannt und brauchen daher im Detail nicht näher beschrieben werden. Als GPS-Empfänger kann beispielsweise ein unter dem Namen 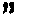 Jupiter ™" von der Firma Rockwell Semiconductor Systems, 4311 Jamboree Road, Newport Beach, CA, USA, vertriebener GPS-Empfänger verwendet werden. Als autonomes Navigationssystem eignet sich beispielsweise ein System, welches unter dem Namen NAVIgates NGH-100 von der Firma Perform Tech, Technologiezentrum Hildesheim, Richthofenstraße 29, D-31137 Hildesheim, vertrieben wird.

Zum Aktivieren und Deaktivieren der Alarmanlage kann zusätzlich noch eine nicht dargestellte Chipkarte samt Chipkartenleser vorgesehen sein. Dies ist beispielsweise in Tiefgaragen von Vorteil, wo es zu Problemen mit dem Einbuchen in ein Mobiltelefonnetz kommen kann.

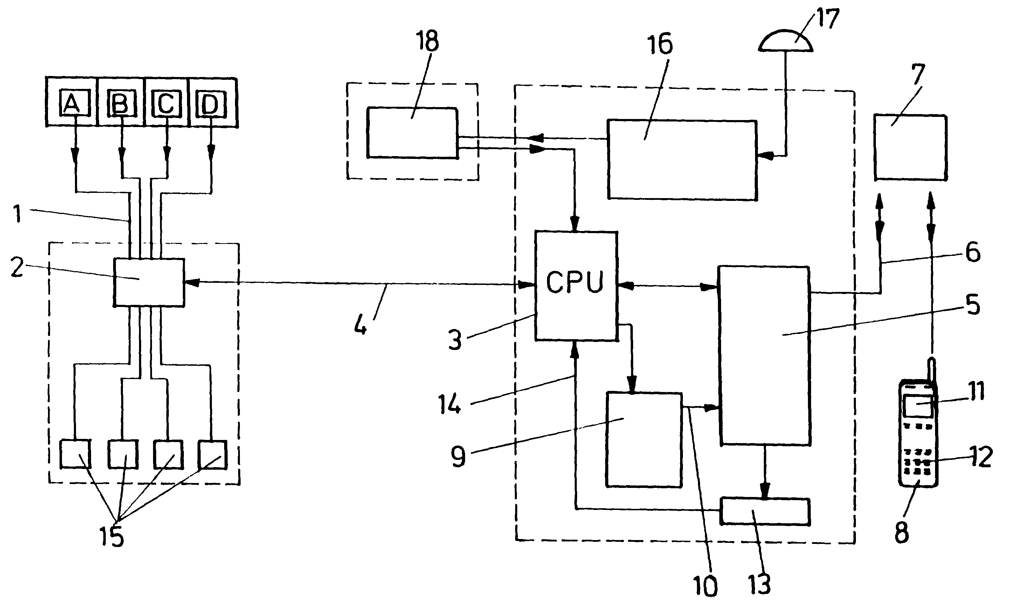

## Patentansprüche

1. Einrichtung zum Fernübertragen von Zustandsdaten eines Objektes, mit einem oder mehreren Sensoren zum Erfassen mindestens eines Zustandes des Objektes in Form von elektrischen Zustandssignalen und einer Sendeeinheit zum drahtlosen Senden von Zustandsdaten in Abhängigkeit von den erfaßten Zustandssignalen, dadurch gekennzeichnet, daß dem Objekt zum Übertragen der Zustandsdaten an ein einem Benutzer zugeordnetes Mobiltelefon eine Einrichtung zur Teilnahme an einem Mobiltelefonnetz als Sendeeinheit zugeordnet ist, und daß dem Objekt weiters eine Sprachsignaleinrichtung zugeordnet ist, die in Abhängigkeit von dem erfaßten Zustandssignalen Sprachsignale an die Einrichtung zur Teilnahme an einem Mobiltelefonnetz abgibt, um die Zustandsdaten in Form von Sprachsignalen an das Mobiltelefon des Benutzers zu übertragen.

2. Einrichtung nach Anspruch 1, dadurch gekennzeichnet, daß die Sprachsignaleinrichtung einen vorzugsweise elektronischen Sprachspeicher, vorzugsweise ein EEPROM, zum Abspeichern vorbestimmter Texte aufweist, die dem Ansprechen eines oder mehrerer Sensoren in einer vorbestimmten Weise zugeordnet sind.

3. Einrichtung nach einem der Ansprüche 1 oder 2, dadurch gekennzeichnet, daß sie derart ausgebildet sind, daß sie bei Ansprechen mindestens eines vorbestimmten Sensors über die Einrichtung zur Teilnahme an einem Mobiltelefonnetz - gegebenenfalls nach automatischer Einbuchung in das Mobiltelefonnetz - automatisch das Mobiltelefon des Benutzers aufgrund einer gespeicherten Nummer anwählt und Zustandsdaten, vorzugsweise in Form von Sprachsignalen, überträgt.

4. Einrichtung nach einem der Ansprüche 1 bis 3, dadurch gekennzeichnet, daß die Einrichtung zur Teilnahme von einem Mobiltelefonnetz zum Empfang von Steuerdaten aus dem Mobiltelefon des Benutzers ausgebildet ist.

5. Einrichtung nach Anspruch 4, dadurch gekennzeichnet, daß die Steuerdaten durch Tastendruck am Mobiltelefon erzeugte analoge Tonsignale sind.

6. Einrichtung nach Anspruch 5, gekennzeichnet durch einen Dekoder zum Umwandeln der analogen Tonsignale in digitale, vorzugsweise binäre Steuersignale.

7. Einrichtung nach einem der Ansprüche 4 bis 6, dadurch gekennzeichnet, daß über die Steuerdaten zumindest eine der folgenden Funktionen realisierbar ist:
- Aktivieren der gesamten Einrichtung,
- Deaktivieren der gesamten Einrichtung,
- Abfragen des Status zumindest eines Sensors,
- Anschalten und/oder Abschalten von dem Objekt zugeordneten Zusatzeinrichtungen.

8. Einrichtung nach einem der Ansprüche 1 bis 7, dadurch gekennzeichnet, daß das Mobiltelefonnetz ein GSM-Netz ist.

9. Einrichtung nach einem der Ansprüche 1 bis 8, dadurch gekennzeichnet, daß zumindest ein Teil der Sensoren zum Erfassen technisch-physikalischer Zustände des Objektes ausgebildet sind.

10. Einrichtung nach einem der Ansprüche 8 bis 9, dadurch gekennzeichnet, daß die Sensoren einen GPS-Empfänger umfassen.

11. Einrichtung nach Anspruch 10, dadurch gekennzeichnet, daß dem GPS-Empfänger ein autonomes Navigationssystem nachgeschaltet ist.

12. Einrichtung nach einem der Ansprüche 1 bis 11, dadurch gekennzeichnet, daß sie eine Alarmanlage zum Überwachen des Objektes ist.

13. Einrichtung nach einem der Ansprüche 1 bis 12, dadurch gekennzeichnet, daß das Objekt mobil, vorzugsweise ein Fahrzeug ist.

14. Datenübertragungssystem, insbesondere Alarmanlage für Fahrzeuge, bestehend aus einer Einrichtung nach einem der Ansprüche 1 bis 14 und einem passenden Mobiltelefon.
